# EUROPEAN PATENT SPECIFICATION

(11) **EP 3 859 035 B1**
(45) Date of publication and mention of the grant of the patent: **02.04.2025**
(21) Application number: 18935435.0
(22) Date of filing: 05.12.2018
(51) Int. Cl.: C22C 38/02, C22C 38/04, C22C 38/44, C22C 38/48, C22C 38/50, C22C 38/54, C21D 8/02, C21D 1/18

(54) **ULTRAHIGH STRENGTH STEEL Q960E THICK PLATE AND MANUFACTURING METHOD**
ULTRAHOCHFESTE DICKE Q960E-STAHLPLATTE UND HERSTELLUNGSVERFAHREN
PLAQUE ÉPAISSE EN ACIER À ULTRA-HAUTE RÉSISTANCE Q960E ET MÉTHODE DE FABRICATION

(30) Priority: 29.09.2018 CN 201811148719
(43) Date of publication of application: 04.08.2021
(73) Proprietor: Nanjing Iron & Steel Co., Ltd., Nanjing, Jiangsu 210035 (CN)
(72) Inventor: JIANG, Zaiwei, Nanjing, Jiangsu 210035 (CN); WANG, Sheng, Nanjing, Jiangsu 210035 (CN); HOU, Zhonghua, Nanjing, Jiangsu 210035 (CN); YAN, Qiangjun, Nanjing, Jiangsu 210035 (CN); ZHANG, Yijie, Nanjing, Jiangsu 210035 (CN); JIANG, Hui, Nanjing, Jiangsu 210035 (CN)
(74) Representative: Gong, Jinping
(86) International application number: PCT/CN2018/119273
(87) International publication number: WO 2020/062564

(56) References cited:
- WO-A1-2018/040859
- CN-A- 101 451 221
- CN-A- 103 469 106
- CN-A- 104 357 755
- CN-A- 104 357 755
- CN-A- 105 779 899
- CN-A- 105 779 899
- CN-A- 108 531 816
- CN-B- 101 363 101
- JP-A- 2005 232 539
- JP-A- H06 158 160
- US-A1- 2005 183 799

## Description

### TECHNICAL FIELD

The present invention relates to the field of ultrahigh-strength steel thick plate manufacturing and particularly to an ultrahigh steel Q960E thick plate and a manufacturing method.

### BACKGROUND ART

Ultrahigh-strength steel is a resource-saving product, also a product with high technology content and high added value. With the vigorous development of large domestic projects, high-strength steels of Q890D and higher grades have been vigorously used in construction machinery, mining, lifting mine carts, offshore platforms, etc. The steels feature a simple structure, a small dead weight and high safety, can carry large dynamic and static loads and have a long service life. However, affected by the thickness of domestic cast blooms, thick structural parts currently have to use conventional Q345-Q6900 series low-alloy structural steels as substitutes, these steels have low strength and their use under severe service conditions might cause engineering accidents due to inadequate strength. For this reason, domestic companies have to import thick ultrahigh-strength steel at a high price for large engineering structural steel parts.

Many domestic steel mills are studying the production process of ultrahigh-strength steels of Q960 and higher grades, but there are no substantive reports on thick Q960E ultrahigh-strength steel and the actual engineering applications of the product in the published patent literature are very few.

JP H06 158160 A describes a method for manufacturing a structure for high tension heat-treated steel.

### SUMMARY OF THE INVENTION

In order to solve the above technical problems, the present invention provides an ultrahigh steel Q960E thick plate as defined in claims 1 to 5. Namely, the present invention provides an ultrahigh steel Q960E thick plate, which comprises chemical components including, by mass percent, C: 0.15%-0.18%, Si: 0.20%-0.50%, Mn: 0.80%-1.30%, P: ≤0.010%, S: ≤0.003%, Cr: 0.30%-0.50%, Mo: 0.40%-0.60%, Ni: 0.80%-1.0%, Ti: 0.008%-0.030%, Nb: 0.015%-0.050%, B: 0.0008%-0.0025% and the balance: Fe and unavoidable impurities, the ultrahigh steel Q960E having a yield strength greater than 960 MPa measured according to GB/T228-2002.

Technical effect: The present invention adopts a composition design of medium-high carbon and alloying, and provides an ultrahigh-strength steel thick plate through the interaction of carbon, manganese, chromium, nickel, molybdenum and other alloying elements and niobium, titanium, vanadium and other microalloying elements.

The present invention further delimits the following embodiments:

Further, the ultrahigh strength steel Q960E thick plate comprises chemical components including, by mass percent, C: 0.16%, Si: 0.24%, Mn: 1.13%, P: ≤0.010%, S: ≤0.003%, Cr: 0.45%, Mo: 0.50%, Ni: 0.91%, Ti: 0.008%-0.030%, Nb: 0.015%-0.050%, B: 0.0008%-0.0025% and the balance: Fe and unavoidable impurities.

The foregoing ultrahigh strength Q960E thick plate comprises chemical components including, by mass percent, C: 0.17%, Si: 0.28%, Mn: 1.24%, P: ≤0.010%, S: ≤0.003%, Cr: 0.43%, Mo: 0.48%, Ni: 0.95%, Ti: 0.008%-0.030%, Nb: 0.015%-0.050%, B: 0.0008%-0.0025% and the balance: Fe and unavoidable impurities.

The foregoing ultrahigh strength steel Q960E thick plate comprises chemical components including, by mass percent, C:0.16%, Si:0.25%, Mn: 1.10%, P: ≤0.010%, S: ≤0.003%, Cr:0.44%, Mo:0.50%, Ni:0.92%, Ti:0.008%-0.030%, Nb:0.015%-0.050%, B:0.0008%-0.0025% and the balance: Fe and unavoidable impurities.

The foregoing ultrahigh strength steel Q960E thick plate is 90 mm thick.

Another object of the present invention is to provide a manufacturing method as defined in claims 6 to 8. Namely, the present invention provides a manufacturing method of the ultrahigh strength steel Q960E thick plate, comprising the following steps: desulfurization pretreatment of molten iron - converter smelting - LF+RH refining - continuous casting - slow cooling of blanks - heating of cast blooms - dephosphorization - rolling - air cooling - flaw detection - shot blasting - quenching - tempering - straightening - cutting - sampling - spraying or printing marks - inspection - warehousing, wherein the molten steel is subjected to continuous casting or die casting after vacuum degassing, and the cast blooms or billets are heated at 1,180°C-1,240°C and then rolled in the austenite recrystallization zone and non-recrystallization zone respectively; wherein in the recrystallization zone, the pass reduction rate is above 12% and the finish rolling temperature is above 980°C; and in the non-recrystallization zone, the cumulative reduction rate of rolling is above 40%, the initial rolling temperature is below 950°C and the finish rolling temperature is above 850°C; and wherein after the temperature is reduced to room temperature through air cooling after rolling, offline heat treatment is conducted at quenching temperature of 880°C-930°C and tempering temperature of 550°C-600°C.

In the foregoing manufacturing method of the ultrahigh steel Q960E thick plate, continuously cast blooms are preferably 320 mm thick.

Beneficial effects of the present invention:
(1) In the present invention, carbon is one of the most effective strengthening elements in steel. The C dissolved in the matrix can play a significant solid solution strengthening effect, but it will cause a significant decrease in plasticity and toughness; C can improve the hardenability of steel, is conducive to the formation of a high-strength microstructure and plays a role in structural strengthening; in addition, it is important that C bonds to strong carbide forming elements in steel such as Nb, V, Ti and Mo, which play an important role in tempering resistance and precipitation strengthening during tempering; if the content of C is too low, the foregoing beneficial effects will not be achieved, but if the content of C is too high, the plasticity and toughness will be seriously impaired and especially, the weldability will be deteriorated; after comprehensive consideration, the content of carbon element in the present invention is 0.15%-0.18%;
(2) In the present invention, silicon is a common deoxidizer in steel, so a certain minimum content is required. Further, silicon has a strong solid solution strengthening capacity and will not cause the deterioration of plasticity and toughness in a certain range; further, Si can also improve the tempering softening resistance of steel, and can inhibit the coarsening of precipitated carbides to some extent; however, when the content of Si is too high, the plasticity, toughness and weldability of the material will be reduced; after comprehensive consideration of the effects of silicon in all aspects, the content of silicon element in the present invention is 0.20%-0.50%;
(3) In the present invention, manganese is the most popular alloying element in steel and a common deoxidizer and desulfurizer; Mn can significantly improve the hardenability of steel and can improve the toughness of the structure at a certain content, but when the content is high, it will damage the plasticity, toughness and welding performance; the presence of a certain amount of Mn can avoid hot brittleness caused by S and improve the performance of sulfide inclusions, but high Mn content is prone to axial segregation and banded structure; after comprehensive consideration of various effects of manganese on the structure and properties of steel, the content of manganese in this material is 0.80%-1.30%;
(4) In the present invention, sulfur element can easily bond to manganese and other elements in steel to form sulfide inclusions, which are particularly unfavorable to the transverse plasticity and toughness of steel, so the content of sulfur should be as low as possible; phosphorus is also a harmful element in steel, which seriously damages the plasticity and toughness of steel plates; for the present invention, both sulfur and phosphorus are unavoidable impurity elements and should be as low as possible; considering the actual steelmaking level, the present invention requires that P shall be ≤0.012% and S shall be ≤0.003%;
(5) In the present invention, chromium can improve the hardenability of steel and meanwhile can improve resistance to corrosion and hydrogen-induced cracking and can improve wear resistance of steel; however, too high Cr content will worsen the toughness of quenched and tempered steel and damage the welding performance of the steel; in the present invention, the content of chromium element shall be controlled at 0.30%-0.50%;
(6) In the present invention, molybdenum can significantly improve the hardenability of the material, and especially when Mo is used together with Nb and B, the effect is even better; further, it is important that Mo can form a fine carbide Mo₂C during tempering of the steel, generating an effect of precipitation strengthening; however, excessive Mo content will damage the toughness and weldability of the material and result in an increase in cost; in the present invention, the content of molybdenum element is 0.40%-0.60%;
(7) In the present invention, nickel is an element that stabilizes austenite and adding nickel to quenched and tempered steel can greatly improve the toughness of the steel, the low temperature toughness in particular. In the present invention, in order to ensure extremely high strength and hardness, higher carbon content is adopted in the alloy design, thereby causing very poor toughness and plasticity of the steel plate. In order to ensure that the steel plate not only has high strength and hardness but also has certain roughness and plasticity, considering that nickel is a precious alloying element, the content of nickel in the present invention is 0.80%-1.00%;
(8) In the present invention, titanium can deoxidize and refine grains, strengthen ferrite, form carbides, shrink the γ zone, shift the austenite isothermal transformation diagram to the right and reduce overheating sensitivity; titanium improves hardenability when dissolved in solid solution, reduces hardenability when forming carbides, can delay tempering temperature and achieve tempering at higher temperature when forming carbides and improves welding performance; the content of titanium in the present invention is controlled at 0.008%-0.030%;
(9) In the present invention, niobium element in steel can prevent recrystallization, hinder the growth of recrystallized grains and improve strength; at the same time, niobium can strongly form niobium carbides and nitrides in steel, thereby influencing the performance of steel, and further, niobium element can refine grains and reduce the overheating sensitivity and temper brittleness of steel; in the present invention, the content of niobium element is controlled at 0.015%-0.050%;
(10) In the present invention, boron is a hardenable element, which plays an important role in improving the hardenability of steel plates, thick steel plates in particular, and the addition of a small amount of boron to steel can greatly improve the hardenability of the steel plate; boron is rich in resources and cheap. Adding a small amount of boron can significantly reduce the addition of precious alloying elements such as manganese, nickel, chromium and molybdenum; however, too much boron will increase the segregation of grain boundaries, thereby reducing the toughness and plasticity of the steel material; in the present invention, the content of boron element is 0.0008%-0.0025%;
(11) In the present invention, the purpose of converter steelmaking and vacuum treatment is to ensure the basic composition requirements of molten steel, remove harmful gases such as oxygen and hydrogen in steel, and add essential alloying elements such as manganese and titanium to adjust alloying elements;
(12) The structure of the steel plate obtained in the present invention is tempered sorbite, of which yield strength is greater than 960 Mpa, tensile strength is 980 Mpa-1,100 Mpa, elongation after fracture is greater than 13% and low temperature impact toughness at -40°C is above 34J.

### DETAILED DESCRIPTION

### Embodiment 1

The embodiment provides an ultrahigh strength steel Q960E thick plate, comprising chemical components including, by mass percent, C: 0.16%, Si: 0.24%, Mn: 1.13%, P: ≤0.008%, S: ≤0.002%, Cr: 0.45%, Mo: 0.50%, Ni: 0.91%, Ti: 0.020%, Nb: 0.025%, B: 0.0016% and the balance: Fe and unavoidable impurities.

The manufacturing method of the foregoing steel plate comprises the following steps: desulfurization pretreatment of molten iron - converter smelting - LF+RH refining - continuous casting - slow cooling of blanks - heating of cast blooms - dephosphorization - rolling - air cooling - flaw detection - shot blasting - quenching - tempering - straightening - cutting - sampling - spraying or printing marks - inspection - warehousing.

The molten steel smelted according to the formula is subjected to continuous casting after vacuum degassing. The continuously cast blooms are 320 mm thick. The billets are heated to furnace temperature of 1,180°C, maintained at this temperature for 350 min and then discharged and rolled in the austenite recrystallization zone and non-recrystallization zone respectively, wherein in the recrystallization zone, the pass reduction rate shall be above 12% and the finish rolling temperature shall be 1,030°C, and in the non-recrystallization zone, the cumulative reduction rate of rolling shall be above 40%, the initial rolling temperature shall be 920°C, the finish rolling temperature shall be 890°C and the finish rolling thickness of the steel plate shall be 90 mm. After rolling, the temperature is reduced to room temperature through air cooling, and then quenching and tempering are conducted, the quenching temperature is 930°C and the tempering temperature is 580°C.

### Embodiment 2

The embodiment provides an ultrahigh strength steel Q960E thick plate, comprising chemical components including, by mass percent, C: 0.17%, Si: 0.28%, Mn: 1.24%, P: ≤0.008%, S: ≤0.002%, Cr: 0.43%, Mo: 0.48%, Ni: 0.95%, Ti: 0.016%, Nb: 0.027%, B: 0.0017% and the balance: Fe and unavoidable impurities.

The molten steel smelted according to the formula is subjected to continuous casting after vacuum degassing. The continuously cast blooms are 320 mm thick. The billets are heated to furnace temperature of 1,200°C, maintained at this temperature for 345 min and then discharged and rolled in the austenite recrystallization zone and non-recrystallization zone respectively, wherein in the recrystallization zone, the pass reduction rate shall be above 12% and the finish rolling temperature shall be 1,035°C, and in the non-recrystallization zone, the cumulative reduction rate of rolling shall be above 40%, the initial rolling temperature shall be 930°C, the finish rolling temperature shall be 900°C and the finish rolling thickness of the steel plate shall be 90 mm. After rolling, the temperature is reduced to room temperature through air cooling, and then quenching and tempering are conducted, the quenching temperature is 930°C and the tempering temperature is 585°C.

### Embodiment 3

The embodiment provides an ultrahigh strength steel Q960E thick plate, comprising chemical components including, by mass percent, C:0.16%, Si:0.25%, Mn:1.10%, P: ≤0.008%, S: ≤0.0015%, Cr:0.44%, Mo:0.50%, Ni:0.92%, Ti:0.015%, Nb:0.026%, B:0.0016% and the balance: Fe and unavoidable impurities.

The molten steel smelted according to the formula is subjected to continuous casting after vacuum degassing. The continuously cast blooms are 320 mm thick. The billets are heated to furnace temperature of 1,220°C, maintained at this temperature for 345 min and then discharged and rolled in the austenite recrystallization zone and non-recrystallization zone respectively, wherein in the recrystallization zone, the pass reduction rate shall be above 12% and the finish rolling temperature shall be 1,040°C, and in the non-recrystallization zone, the cumulative reduction rate of rolling shall be above 40%, the initial rolling temperature shall be 915°C, the finish rolling temperature shall be 890°C and the finish rolling thickness of the steel plate shall be 90 mm. After rolling, the temperature is reduced to room temperature through air cooling, and then quenching and tempering are conducted, the quenching temperature is 930°C and the tempering temperature is 590°C.

The mechanical properties of the steel plates in Embodiment 1, Embodiment 2 and Embodiment 3 were tested. To be specific, the strength was tested according to GB/T228-2002 Metallic materials - Tensile testing - Part 1: Method of test at room temperature, the low temperature impact toughness was tested according to GB/T 229-2007 Metallic materials - Charpy pendulum impact test method, and the hardness was tested according to GB/T231.1-2009. The obtained results are shown in Table 1.

**Table 1 Mechanical properties of the steel plates in Embodiment 1-Embodiment 3**

| Embodiment | Yield strength /MPa | Tensile strength /MPa | Elongation A/% | -40°C mean impact work KV2/J |
|---|---|---|---|---|
| 1 | 965 | 1025 | 15 | 62 |
| 2 | 968 | 1056 | 14.5 | 50 |
| 3 | 972 | 1037 | 15.5 | 54 |

From Table 1, it may be known that among the performance indicators of the ultrahigh-strength steel obtained in the present invention, the yield strength is greater than 960 MPa, the tensile strength is 980 Mpa-1,100 Mpa, the elongation after fracture is greater than 13%, and the low temperature impact toughness at -40°C is above 34J. It can be seen that the high-strength steel designed in the present invention has ultrahigh strength and good elongation as well as good low-temperature impact toughness, and is produced through hot rolling and offline heat treatment. The process is simple and the steel can be applied to the bases of large cranes.

In addition to the foregoing embodiments, the present invention may also have other implementation manners. The invention is defined in the appended claims.

## Claims

1. An ultrahigh strength steel Q960E thick plate, wherein the ultrahigh strength steel Q960E thick plate comprises chemical components including, by mass percent, C: 0.15%-0.18%, Si: 0.20%-0.50%, Mn: 0.80%-1.30%, P: ≤0.010%, S: ≤0.003%, Cr: 0.30%-0.50%, Mo: 0.40%-0.60%, Ni: 0.80%-1.0%, Ti: 0.008%-0.030%, Nb: 0.015%-0.050%, B: 0.0008%-0.0025% and the balance: Fe and unavoidable impurities, the ultrahigh strength steel Q960E having a yield strength greater than 960 MPa measured according to GB/T228-2002 as defined in the description.

2. The ultrahigh strength steel Q960E thick plate according to claim 1, wherein the ultrahigh steel Q960E thick plate comprises chemical components including, by mass percent, C: 0.16%, Si: 0.24%, Mn: 1.13%, P: ≤0.010%, S: ≤0.003%, Cr: 0.45%, Mo: 0.50%, Ni: 0.91%, Ti: 0.008%-0.030%, Nb: 0.015%-0.050%, B: 0.0008%-0.0025% and the balance: Fe and unavoidable impurities.

3. The ultrahigh strength steel Q960E thick plate according to claim 1, wherein the ultrahigh steel Q960E thick plate comprises chemical components including, by mass percent, C: 0.17%, Si: 0.28%, Mn: 1.24%, P: ≤0.010%, S: ≤0.003%, Cr: 0.43%, Mo: 0.48%, Ni: 0.95%, Ti: 0.008%-0.030%, Nb: 0.015%-0.050%, B: 0.0008%-0.0025% and the balance: Fe and unavoidable impurities.

4. The ultrahigh strength steel Q960E thick plate according to claim 1, wherein the ultrahigh steel Q960E thick plate comprises chemical components including, by mass percent, C: 0.16%, Si: 0.25%, Mn: 1.10%, P: ≤0.010%, S: ≤0.003%, Cr: 0.44%, Mo: 0.50%, Ni: 0.92%, Ti: 0.008%-0.030%, Nb: 0.015%-0.050%, B: 0.0008%-0.0025% and the balance: Fe and unavoidable impurities.

5. The ultrahigh strength steel Q960E thick plate according to claim 1, wherein the steel plate is 90 mm thick.

6. A manufacturing method of the ultrahigh strength steel Q960E thick plate according to claim 1, wherein the method comprises the following steps: desulfurization pretreatment of molten iron - converter smelting - LF+RH refining - continuous casting - slow cooling of blanks - heating of cast blooms - dephosphorization - rolling - air cooling - flaw detection - shot blasting - quenching - tempering - straightening - cutting - sampling - spraying or printing marks - inspection - warehousing, wherein the molten steel is subjected to continuous casting or die casting after vacuum degassing, and the cast blooms or billets are heated at 1,180°C-1,240°C and then rolled in the austenite recrystallization zone and non-recrystallization zone respectively; wherein in the recrystallization zone, the pass reduction rate is above 12% and the finish rolling temperature is above 980°C; and in the non-recrystallization zone, the cumulative reduction rate of rolling is above 40%, the initial rolling temperature is below 950°C and the finish rolling temperature is above 850°C; and wherein after the temperature is reduced to room temperature through air cooling after rolling, offline heat treatment is conducted at quenching temperature of 880°C-930°C and tempering temperature of 550°C-600°C.

7. The manufacturing method of the ultrahigh strength steel Q960E thick plate according to claim 6, wherein continuously cast blooms are 320 mm thick.

## Patentansprüche

1. Ultrahochfeste Stahlplatte Q960E, wobei die ultrahochfeste Stahlplatte Q960E, bezogen auf das Massenprozent, die folgenden chemischen Bestandteile umfasst: C: 0,15%-0,18%, Si: 0,20%-0,50%, Mn: 0,80%-1,30%, P: ≤0,010%, S: ≤0,003%, Cr: 0,30%-0,50%, Mo: 0,40%-0,60%, Ni: 0,80%-1,0%, Ti: 0,008%-0,030%, Nb: 0,015%-0,050%, B: 0,0008%-0,0025% und als Rest Fe und unvermeidbare Verunreinigungen, wobei der ultrahochfeste Stahl Q960E eine Streckgrenze von mehr als 960 MPa aufweist, gemessen nach GB/T228-2002, wie in der Beschreibung definiert.

2. Ultrahochfeste Stahlplatte Q960E nach Anspruch 1, wobei die ultrahochfeste Stahlplatte Q960E, bezogen auf das Massenprozent, die folgenden chemischen Bestandteile umfasst: C: 0,16%, Si: 0,24%, Mn: 1,13%, P: ≤0,010%, S: ≤0,003%, Cr: 0,45%, Mo: 0,50%, Ni: 0,91%, Ti: 0,008%-0,030%, Nb: 0,015%-0,050%, B: 0,0008%-0,0025% und als Rest Fe und unvermeidbare Verunreinigungen.

3. Ultrahochfeste Stahlplatte Q960E nach Anspruch 1, wobei die ultrahochfeste Stahlplatte Q960E, bezogen auf das Massenprozent, die folgenden chemischen Bestandteile umfasst: C: 0,17%, Si: 0,28%, Mn: 1,24%, P: ≤0,010%, S: ≤0,003%, Cr: 0,43%, Mo: 0,48%, Ni: 0,95%, Ti: 0,008%-0,030%, Nb: 0,015%-0,050%, B: 0,0008%-0,0025% und als Rest Fe und unvermeidbare Verunreinigungen.

4. Ultrahochfeste Stahlplatte Q960E nach Anspruch 1, wobei die ultrahochfeste Stahlplatte Q960E, bezogen auf das Massenprozent, die folgenden chemischen Bestandteile umfasst: C: 0,16%, Si: 0,25%, Mn: 1,10%, P: ≤0,010%, S: ≤0,003%, Cr: 0,44%, Mo: 0,50%, Ni: 0,92%, Ti: 0,008%-0,030%, Nb: 0,015%-0,050%, B: 0,0008%-0,0025% und als Rest Fe und unvermeidbare Verunreinigungen.

5. Ultrahochfeste Stahlplatte Q960E nach Anspruch 1, wobei die Stahlplatte 90 mm dick ist.

6. Herstellungsverfahren für die ultrahochfeste Stahlplatte Q960E nach Anspruch 1, wobei das Verfahren die folgenden Schritte umfasst: Entschwefeln von Roheisen - Konverterfrischen - LF+RH-Frischen - Stranggießen - langsames Abkühlen der Brammen - Erwärmen der Gussknüppel - Entphosphoren - Walzen - Luftkühlen - Fehlererkennen - Kugelstrahlen - Abschrecken - Anlassen - Richten - Schneiden - Probenahme - Sprühen oder Aufdrucken von Markieren - Prüfen - Lagern, wobei der geschmolzene Stahl nach der Vakuumentgasung dem Stranggießen oder Kokillengießen unterzogen wird und die Gussknüppel oder -vorblöcke bei 1180°C-1240°C erwärmt und dann jeweils in der Austenitrekristallisationszone und der Nichtrekristallisationszone gewalzt werden; wobei in der Rekristallisationszone die Stichabnahme über 12% liegt und die Endwalztemperatur über 980°C liegt; und in der Nichtrekristallisationszone die kumulative Walzreduktion über 40% beträgt, die Anfangswalztemperatur unter 950°C liegt und die Endwalztemperatur über 850°C liegt; und wobei nach dem Absenken der Temperatur auf Raumtemperatur durch Luftkühlung nach dem Walzen eine Offline-Wärmebehandlung bei einer Abschrecktemperatur von 880°C-930°C und einer Anlasstemperatur von 550°C-600°C durchgeführt wird.

7. Herstellungsverfahren für die ultrahochfeste Stahlplatte Q960E nach Anspruch 6, wobei die stranggegossenen Brammen 320 mm dick sind.

## Revendications

1. Une plaque épaisse d'acier à ultra-haute résistance Q960E, dans laquelle ladite plaque épaisse d'acier à ultra-haute résistance Q960E comprend des éléments chimiques inclurant, en pourcentage massique, C : 0,15 %-0,18 %, Si : 0,20 %-0,50 %, Mn : 0,80 %-1,30 %, P : ≤0,010 %, S : ≤0,003 %, Cr : 0,30 %-0,50 %, Mo : 0,40 %-0,60 %, Ni : 0,80 %-1,0 %, Ti : 0,008 %-0,030 %, Nb : 0,015 %-0,050 %, B : 0,0008 %-0,0025 % et le reste : Fe et impuretés inévitables, ladite plaque épaisse d'acier à ultra-haute résistance Q960E ayant une résistance à la traction supérieure à 960 MPa mesurée selon GB/T228-2002 tel que défini dans la description.

2. La plaque épaisse d'acier à ultra-haute résistance Q960E selon la revendication 1, dans laquelle ladite plaque épaisse d'acier à ultra-haute résistance Q960E comprend des éléments chimiques inclurant, en pourcentage massique, C : 0,16 %, Si : 0,24 %, Mn : 1,13 %, P : ≤0,010 %, S : ≤0,003 %, Cr : 0,45 %, Mo : 0,50 %, Ni : 0,91 %, Ti : 0,008 %-0,030 %, Nb : 0,015 %-0,050 %, B : 0,0008 %-0,0025 % et le reste : Fe et impuretés inévitables.

3. La plaque épaisse d'acier à ultra-haute résistance Q960E selon la revendication 1, dans laquelle ladite plaque épaisse d'acier à ultra-haute résistance Q960E comprend des éléments chimiques inclurant, en pourcentage massique : C : 0,17 %, Si : 0,28 %, Mn : 1,24 %, P : ≤0,010 %, S : ≤0,003 %, Cr : 0,43 %, Mo : 0,48 %, Ni : 0,95 %, Ti : 0,008 %-0,030 %, Nb : 0,015 %-0,050 %, B : 0,0008 %-0,0025 % et le reste : Fe et impuretés inévitables.

4. La plaque épaisse d'acier à ultra-haute résistance Q960E selon la revendication 1, dans laquelle ladite plaque épaisse d'acier à ultra-haute résistance Q960E comprend des éléments chimiques inclurant, en pourcentage massique : C : 0,16 %, Si : 0,25 %, Mn : 1,10 %, P : ≤0,010 %, S : ≤0,003 %, Cr : 0,44 %, Mo : 0,50 %, Ni : 0,92 %, Ti : 0,008 %-0,030 %, Nb : 0,015 %-0,050 %, B : 0,0008 %-0,0025 % et le reste : Fe et impuretés inévitables.

5. La plaque épaisse d'acier à ultra-haute résistance Q960E selon la revendication 1, dans laquelle la plaque d'acier est d'une épaisseur de 90 mm.

6. Un procédé de fabrication de la plaque épaisse d'acier à ultra-haute résistance Q960E selon la revendication 1, dans lequel ledit procédé comprend les étapes suivantes : traitement préliminaire de désulfuration du fer en fusion - affinage en convertisseur - raffinage LF+RH - coulée continue - refroidissement lent des pièces brutes - chauffage des lingots - désphosphoration - laminage - refroidissement à l'air - détection de défauts - sablage - trempe - revenu - redressage - découpe - échantillonnage - pulvérisation ou impression de marques - inspection - entreposage, dans lequel l'acier en fusion est soumis à une coulée continue ou à une coulée sous vide après le dégazage sous vide, et les lingots ou lingots de petit format sont chauffés à une température de 1,180 °C à 1,240 °C, puis laminés respectivement dans la zone de recristallisation de l'austénite et dans la zone non recristallisée ; dans lequel, dans la zone de recristallisation, le taux de réduction par passe est supérieur à 12 % et la température de fin de laminage est supérieure à 980 °C ; et dans la zone non recristallisée, le taux de réduction cumulé de laminage est supérieur à 40 %, la température initiale de laminage est inférieure à 950 °C et la température de fin de laminage est supérieure à 850 °C ; et dans lequel après que la température est réduite à la température ambiante par refroidissement à l'air après laminage, un traitement thermique hors ligne est effectué à une température de trempe de 880 °C à 930 °C et une température de revenu de 550 °C à 600 °C.

7. Le procédé de fabrication de la plaque épaisse d'acier à ultra-haute résistance Q960E selon la revendication 6, dans lequel les lingots coulés continuellement ont une épaisseur de 320 mm.
